# EUROPEAN PATENT APPLICATION

(11) **EP 2 889 668 A1**
(43) Date of publication of application: **01.07.2015**
(21) Application number: 13306867.6
(22) Date of filing: 26.12.2013
(51) Int. Cl.: G02B 27/01, G02C 11/00, G02C 7/08

(54) **A method of determining an optical equipment**

(71) Applicant: ESSILOR INTERNATIONAL (Compagnie Générale d'Optique), 94220 Charenton le Pont (FR)
(72) Inventor: Boiffier, Maxime, 94220 Charenton-le-pont (FR); Callier, Benoit, 94220 Charenton-le-Pont (FR); Reignault, Marc, 94220 Charenton-le-pont (FR)
(74) Representative: Huisman, Aurélien

(57) **Abstract**

The invention relates to a method of determining an optical equipment comprising an optical lens mounted in a spectacle frame intended to be worn by a wearer so that said optical lens is positioned in front of an eye of said wearer relative to said eye, said optical lens having an "object side" face and an "eye side" face, the equipment further comprises a display device, said optical lens being adapted to transmit to said eye of the wearer a real image and a virtual image, said real image being representative of a scene in front of said optical lens, said virtual image being formed by light rays generated by a display source of said display device, said virtual image being directed towards said eye via a display surface, said gaze direction of virtual image GDVI being determined in respect with a reference gaze direction of the wearer RGD, the method comprises a determination step in which a position TX, TY, TZ and/or an orientation RX, RY, RZ of said display surface is/are determined so that at least one light ray coming from the center of the virtual image coincides with said gaze direction of virtual image.

## Description

The invention relates to a method of determining an optical equipment comprising an optical lens mounted in a spectacle frame intended to be worn by a wearer so that said optical lens is positioned in front of an eye of said wearer relative to said eye, said optical lens having an "object side" face and an "eye side" face, the equipment further comprises a display device, said optical lens being adapted to transmit to said eye of the wearer a real image and a virtual image, said real image being representative of a scene in front of said optical lens, said virtual image being formed by light rays generated by a display source of said display device, said virtual image being directed towards said eye via a display surface of said display device. The invention further relates to method of manufacturing an optical lens of an optical equipment determined by a method according to the invention.

The discussion of the background of the invention herein is included to explain the context of the invention. This is not to be taken as an admission that any of the material referred to was published, known or part of the common general knowledge at the priority date of any of the claims.

The existing display optical equipment, especially those that enable a see-around or see-trough vision are standard equipment. In other words, such devices provide very few, if any, possibility of adjustments. In particular the display device is adapted for an average user and does not adapt to a specific user.

In addition to this, even if the information displayed to the user appears on the same location for different equipment, a part of the virtual image may be not entirely visible to the user if the equipment is not customized according to the user, thus limiting the virtual field of view.

As for conventional optical equipment, in particular ophthalmic equipment, each individual user does not have the same visual experience when using a standard display optical device.

For example the information displayed to the user does not appear at the same location in the visual field for each user.

Typically, an information that is to appear on the side of the visual field may, depending on the user, appear in the center of the visual field or even not appear in the visual field of the user.

Therefore, there is a need for a method for providing a display optical equipment that is better adapted to the user of such equipment.

One object of the invention is to provide a method for determining an optical equipment adapted to the needs of the user.

To this end, the invention proposes a method of determining an optical equipment comprising an optical lens mounted in a spectacle frame intended to be worn by a wearer so that said optical lens is positioned in front of an eye of said wearer relative to said eye, said optical lens having an "object side" face and an "eye side" face,
the equipment further comprises a display device, said optical lens being adapted to transmit to said eye of the wearer a real image and a virtual image, said real image being representative of a scene in front of said optical lens, said virtual image being formed by light rays generated by a display source of said display device, said virtual image being directed towards said eye via a display surface, a gaze direction of virtual image being determined in respect with a reference gaze direction of the wearer, wherein the method comprises a determination step in which a position and/or an orientation of said display surface is/are determined so that at least one light ray coming from the center of the virtual image and propagating in free space out of the optical lens coincides with said gaze direction of virtual image.

Advantageously, the method according to the invention allows providing an optical equipment comprising an optical lens and a display device that displays virtual images in a specific gaze direction. Such specific gaze direction is different for each wearer and may also depend on the type of information comprised in the virtual image or the type of activity the wearer carries out when using the optical device.

Therefore the method according to the invention allows providing an optical equipment that may be adapted to the needs of each specific wearer.

According to further embodiments which can be considered alone or in combination:
- said determination step S10 further comprises determining the optical surface of said "eye side" face so that at least one light ray coming from the center of the virtual image coincides with said gaze direction of virtual image GDVI, and/or
- said determination step S10 further comprises determining the geometry of the display surface so that at least one light ray coming from the center of the virtual image coincides with said gaze direction of virtual image GDVI; and/or
- said method further comprises a step of determining the position of the eye S2 in which the position of the eye with respect to said optical lens is determined and the determination step S10 takes into account said position of the eye; and/or
- said optical lens has an ophthalmic function adapted to a prescription of the wearer, and the method further comprises an ophthalmic function determination step S1 during which said ophthalmic function is determined and said determination step S10 takes into account said ophthalmic function; and/or
- the position of the center of rotation of the eye is determined; and/or
- said display surface of said display device being a semi-reflecting surface and being arranged on the "object side" of the optical lens, said display device generating a beam reflecting on said display surface, the determination step S10 includes the sub-steps of:
   o S10.1 determining the "object side" face and the "side eye" face so that the optical lens provides to said eye said ophthalmic function in all gaze the directions;
   o S10.2 determining a position of said display surface relative to said optical lens taking into account said "object side" face and said "side eye" face determined in the previous sub-step S10.1; and/or
- the method further comprising a step of S8 for determining an accommodation required by the wearer to visualize the virtual image and wherein said sub-step of determining the "object side" face and the "side eye" face S10.1 further comprises determining said "object side" face so that the "object side" face provides a power equal to said required accommodation in said gaze direction of virtual image GDVI; and/or
- said optical lens comprising an optical waveguide positioned between said "object side" face and said "eye side" face, said display surface being an exit surface of said optical waveguide, said display device generating a beam reflecting on said display surface, said optical waveguide carrying the virtual image produced by said source toward said "eye side" face according to a direction defined by the orientation RX, RY, RZ of said display surface, the method further comprising a step of S8 for determining an accommodation required by the wearer to visualize the virtual image and the determination step S10 further comprises the sub-steps of:
   o S10.11 determining the "object side" face so that said "object side" face provides a power equal to said required accommodation in the gaze direction of virtual image GDVI;
   o S10.12 determining the "eye side" face so that said optical lens provides said ophthalmic function to said eye,
   o S10.13 determining the position TX, TY, TZ of said display surface; and/or
- said optical lens comprising an optical waveguide positioned between said "object side" surface and said "eye side" surface, said display surface being an exit surface of said optical waveguide, said display device generating a light beam reflecting on said display surface, said optical waveguide carrying the virtual image produced by said source toward said "eye side" surface according to a direction defined by the orientation RX, RY, RZ of said display surface, the method further comprising a step of S8 determining an accommodation required by the wearer for viewing the virtual image and the determination step S10 comprises sub-steps of:
   o S 10.111 determining the position TX, TY, TZ of said display surface;
   o S10.112 determining the "eye side" face so that it provides a power equal to said ophthalmic function minus said required accommodation;
   o S10.113 determining the "object side" face so that said optical lens provides said ophthalmic function to said eye; and/or
- said optical lens defining a "real view field" in which said wearer receives said real image, and wherein said gaze direction of virtual image GDVI propagates from the center of the real view field, said optical lens comprising an optical waveguide positioned between said "object side" face and said "eye side" face, said display surface being an output surface of said optical waveguide, said optical waveguide carrying the image virtual produced by said source to said "eye side" face according to a direction defined by the orientation RX, RY, RZ of said display surface, said optical waveguide having a given position relative to said spectacle frame, the method further comprises a step of S8 determining an accommodation required by the wearer for viewing the virtual image and the determination step S10 includes the sub-steps of:
   o S10.1111 determining the "eye side" face so that it provides a power equal to said ophthalmic function minus said required accommodation;
   o S10.1112 determining the "object side" face so that the optical lens provides said ophthalmic function to said eye;
   o S10.1113 determining the position TX, TY, TZ of said display surface in taking into account said gaze direction of virtual image GDVI; and/or
- said display surface being a diffractive surface and/or holographic surface arranged on the "eye side" face, said display device generating a light beam which is returned towards the eye, the method further comprising steps of:
   o S21 determining the "object side" face and the "eye side" face so that the optical lens provides the ophthalmic function,
   o S22 determining the position TX, TY, TZ on the "eye side" face of the diffractive surface and/or holographic surface in taking into account the gaze direction of virtual image GDVI;
   o S23 determining the geometric features of the diffractive surface and/or holographic surface of said device according to the position of the source, the gaze direction of virtual image GDVI, the position of the optical lens relative to the eye of the wearer and the "eye side" face; and/or
- said display surface is a reflecting surface arranged on said "eye side" face, said display device generating a light beam which is sent towards the eye, the method further comprising steps of:
   o S31 determining the position TX, TY, TZ of the reflecting surface in taking into account the gaze direction of virtual image GDVI and the prescription of the wearer,
   o S32 determining said "eye side" face so that said "eye side" face supports the reflecting surface;
   o S33 determining the "object side" face so that the optical lens provides the ophthalmic function to the wearer; and/or
- the sub-steps of the step S10 are repeated according to an iterative process.

The invention further relates to a method of manufacturing an optical lens of optical equipment, said optical lens being adapted to be mounted in a spectacle frame intended to be worn by a wearer so that said optical lens is positioned in front of an eye of said wearer relative to said eye, said method comprising a step of selection of an optical waveguide in a set of optical waveguides of different optical path length.

According to a further aspect, the invention relates to a computer program product comprising one or more stored sequence of instruction that is accessible to a processor and which, when executed by the processor, causes the processor to carry out the steps of the methods according to the invention.

According to another aspect the invention relates to a program which makes a computer execute the method of the invention.

The invention also relates to a computer readable medium carrying one or more sequences of instructions of the computer program according to the invention.

The invention further relates to a computer-readable storage medium having a program recorded thereon; where the program makes the computer execute the method of the invention.

The invention relates to a device comprising a processor adapted to store one or more sequence of instructions and to carry out at least one of the steps of a method according to the invention.

Elements in the figures are illustrated for simplicity and clarity and have not necessarily been drawn to scale. For example, the dimensions of some of the elements in the figure may be exaggerated relative to other elements to help improve the understanding of the embodiments of the present invention.

Non limiting embodiments of the invention will now be described with reference to the accompanying drawing wherein:
- Figures 1 and 2 are schematic representation of an optical system of an eye and an optical lens,
- Figure 3 represents an first type of optical equipment that may be determined according to the method of the invention,
- Figure 4 represents a second type of optical equipment that may be determined according to the method of the invention, and
- Figure 5 represents a third type of optical equipment that may be determined according to the method of the invention.

The invention relates to a method of determining an optical equipment to be adapted to the specific needs of a wearer. In particular, the optical equipment is determined so as to provide in addition to real image representative of the scene in front of the wearer, virtual images provided by a display device, the virtual images being provided with a specific gaze direction of virtual image.

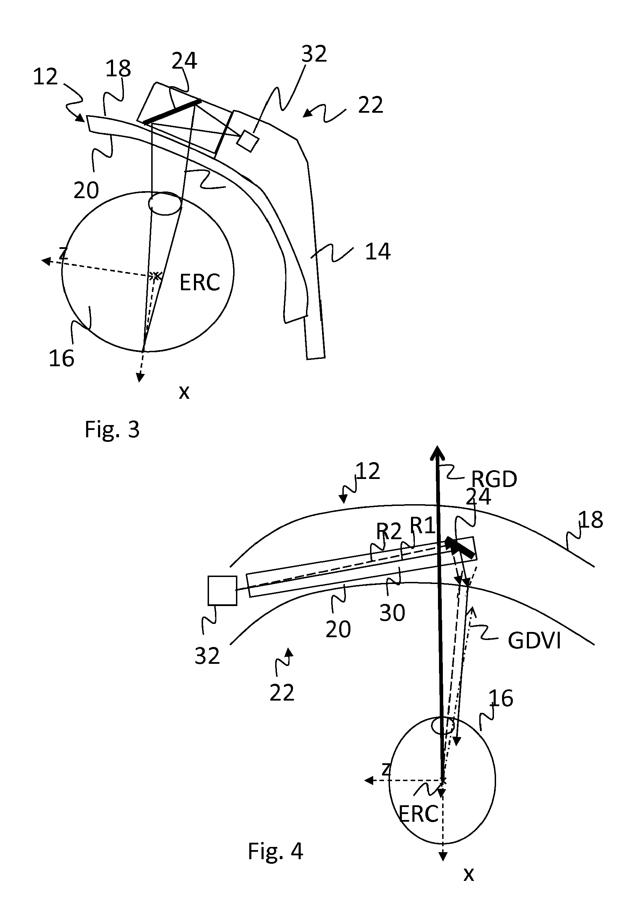

Figure 3 represents an example of optical equipment 10 determined according to the invention.

The optical equipment comprises an optical lens 12 mounted in a spectacle frame 14 intended to be worn by a wearer.

When the optical equipment is worn by a wearer the optical lens is positioned in front of an eye 16 of said wearer.

The optical lens has an "object side" face 18 and an "eye side" face 20.

The optical equipment further comprises a display device 22.

The optical equipment is adapted to transmit to the eye 16 of the wearer a real image and a virtual image. The real image is representative of the scene in front of the optical lens 12 and the virtual image is produced by a display source 32 of the display device 22 and supplied to the eye 16 from a display surface 24 of said display device 22.

Figure 4 shows a gaze direction of virtual image GDVI which is defined as the direction of gaze of said eye usually expressed in respect with a reference gaze direction of the wearer RGD. The reference gaze direction of the wearer RGD is typically determined in respect with the center of rotation of the wearer eye and with respect a mounting cross arranged on the object side of the lens. The gaze direction of virtual image GDVI can be determined according to specific needs of the wearer. As discussed below, it is important to mention that the gaze direction of virtual image GDVI intercepts the centre of rotation of the eye due to the fact that it is a gaze direction.

The center of rotation of the eye of the wearer ERC is shown on figure 4.

A display device comprises a display source 32 that generates a light beam. From the center of said display source output light rays R1, R2 having various directions. After reaching a display surface and being refracted by the "eye side" face the rays R1 and R2 exit the optical lens and enter within the eye of the wearer. R1 does not pass through the center of rotation of the eye ERC. R1 does pass through the center of rotation of the eye ERC.

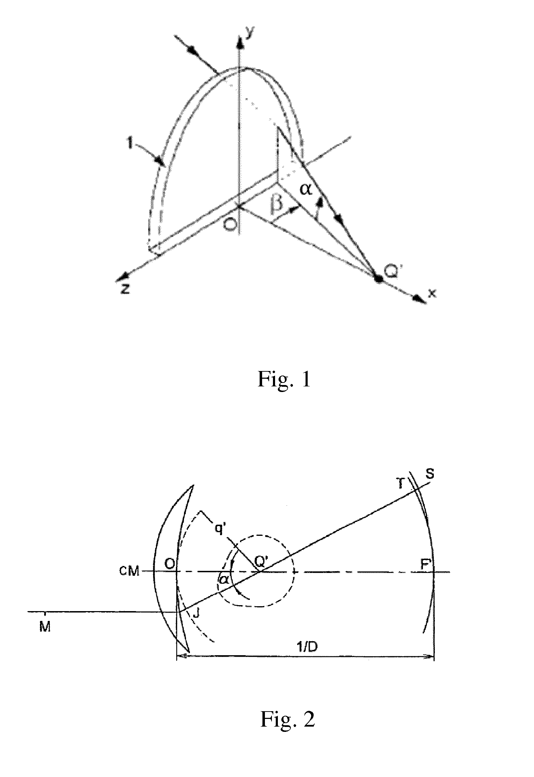

Figures 1 and 2 are diagrammatic illustrations of optical systems of eye and optical lens, thus showing the definitions for gaze directions used in the description.

More precisely, figure 1 represents a perspective view of such a system illustrating parameters α and β that may be used to define a gaze direction.

Figure 2 is a view in the vertical plane parallel to the antero-posterior axis of the wearer's head and passing through the center of rotation of the eye in the case when the parameter β is equal to 0.

The center of rotation of the eye is labeled Q'. The axis Q'F', shown on Figure 2 in a dot-dash line, is the horizontal axis passing through the center of rotation of the eye and extending in front of the wearer - that is the axis Q'F' corresponding to the primary gaze direction.

An apex sphere, of center Q', and of radius q', is defined by the intersection of the horizontal axis and the "eye side" face. For example, a value of radius q' of 25.5 mm corresponds to a usual value and provides satisfying results when wearing optical lenses.

On the particular example shown on fig. 2 the rear face is spherical and no pantoscopic angle is considered. For different case, apex sphere is not tangential to the rear surface.

FIG. 2 shows a diagram of an eye-and-lens optical system in a side view, and shows the definitions used hereafter in the description. The centre of rotation of the eye is called Q'. The position of the centre of rotation of the eye Q' with respect to the optical equipment in worn condition can be determined as the intersection point between the gaze directions. The axis Q'F' represented in the figure by a chain-dotted line is the horizontal axis passing through the centre of rotation of the eye and continuing in front of the wearer-in other words the axis Q'F' corresponds to the primary viewing direction.

This axis cuts, on the front face, a point on the lens called the mounting cross FC, which is marked on the lenses in order to allow their positioning by an optician. The optician can put a mark on the lens when the wearer wears the optical equipment. This axis cuts, on the rear face, a point O on the lens. Let point O be the point of intersection of the rear face and tins axis Q'F'.

A given gaze direction - represented by a solid line on figure 1 - corresponds to a position of the eye in rotation around Q' and to a point J of the apex sphere.

The angle β is the angle formed between the axis Q'F' and the projection of the straight line Q'J on the horizontal plane comprising the axis Q'F'; this angle appears on the scheme on Figure 1.

The angle α is the angle formed between the axis Q'J and the projection of the straight line Q'J on the horizontal plane comprising the axis Q'F'; this angle appears on the scheme on Figures 1 and 2.

A given gaze direction thus corresponds to a point J of the apex sphere or to a couple (α, β). The more the value of the lowering gaze angle is positive, the more the gaze is lowering and the more the value is negative, the more the gaze is rising.

FIG. 2 shows the position of the eye and of the reference frame linked to the eye, in the principal viewing direction, α = β = 0, called the primary viewing direction. In this particular direction, the points J and O thus coincide.

The mounting cross of the lens can be geometrically marked on the lens by a cross or any other mark such as a point surrounded by a circle produced on the front side of the lens, also named "object-side", or by any other appropriate means; this is a centering point produced on the lens which is used by the optician to fit the lens in the frame. In spherical coordinates, the mounting cross has the coordinates (0, 0) as it corresponds to the point of intersection of the front face of the lens and the primary viewing direction, as defined previously.

The position of the center of rotation of the eye ERC in respect with the equipment can be determined individually. For example, the wearer is asked to wear the optical equipment comprising a lens providing no ophthalmic function. Then an operator measures with a ruler the distance DVO between the eye and the lens. By considering an average value of eye radius Reye = 12mm one determines q'= DVO+Reye.

Alternatively, the operator uses a pupillometer or a ruler to determine the position (according to Y and Z axis) of the left and right eyes in respect with the optical equipment.

According to an embodiment of the invention, the display device included in the optical equipment comprises at least one element defining the position of the image in the visual field of the wearer.

Said element may be one of or a combination of:
- an optical waveguide guide,
- a reflective area on the surface of the optical lens,
- a reflective area arranged between the front face and the rear face of the optical lens,
- a diffractive area,
- an emissive area.

The method according to the invention allows determining the optical equipment so that at least one light ray coming from the center of the virtual image coincides with said gaze direction of virtual image.

The method according to the invention comprises a determining step during which the position TX, TY, TZ and/or an orientation RX, RY, RZ of a reference frame linked with the display surface 24 relative to the display source and the optical lens 12 are determined.

According to an embodiment of the invention, during the determining step the geometry of the display surface is determined so that the optical axis according to which the virtual image is supplied to the eye of the wearer and the specific gaze direction of virtual image are parallel and that said gaze direction of virtual image intercepts said display surface.

For example, during the determining step the position and/or orientation and/or geometry of the display surface and/or at least one area of the "eye side" face of the optical lens can be determined so that the optical axis according to which the virtual image is supplied to the eye of the wearer and said gaze direction of virtual image are the same.

According to an embodiment of the invention, the optical lens has an ophthalmic function adapted to the prescription of the wearer. The method according to the invention thus further comprises an ophthalmic function determination step S1 during which the ophthalmic function of the optical lens is determined and the optical function is considered when determining the position TX, TY, TZ and/or an orientation RX, RY, RZ of the display surface 24 relative to the display source and the optical lens 12.

Furthermore, when determining the configuration of the display surface, the relative position of the eye with the optical lens and/or the display surface can be considered. Typically the position of the center of rotation of the eye of the wearer may be considered.

Therefore, the method according to the invention may comprise an eye position determining step during which the relative position of the eye, for example the center of rotation of the eye, can be determined.

According to an embodiment, as represented on figure 4, the display surface of said display device is a semi-reflecting surface placed in front of the "object side" face of the optical lens.

The display device generates a beam reflecting on the display surface in direction of the eye of the wearer.

When applied to an optical equipment as represented on figure 1 and so as to provide an optical equipment having an ophthalmic function adapted to the wearer, the determining step S10 includes the sub- steps of:
- S10.1 determining an area of the "object side" face and an area of the "side eye" face so that the optical lens has said ophthalmic function in all gaze the directions;
- S10.2 determining a position of said display surface relative to said optical lens taking into account said "object side" face and said "side eye" face determined in the previous sub-step S10.1 of determining an area of the "object side" face.

The area of the "eye side" face position Xe, Ye, Ze can be determined, as a correct approximation, as the intersection of the gaze direction of the virtual image with a plane at a distance q' from the center of rotation of the eye, as described in figure 2. The area of the object side face position Xe, Ye, Ze can be determined, as a correct approximation, as = Ze ,Yo = Ye , and Xo = Xe + Tl, with Tl the thickness of the lens.

The position of the display surface can be determined as follows:

A ray of light corresponding to the gaze direction of the virtual image is propagated, using an optical calculation software and an opto-mechanical model of the lens, until it reaches the eye side face 20 of the lens 12. Then, the ray is propagated within the lens until it reaches the "object side" face 18. Again it is propagated out of the lens until it reaches the Xd position corresponding to the wanted X position of the display surface 24. The ray of light, at this position, has a direction different to the gaze direction of virtual image GDVI due to the refractive power of the "eye side" face, the "object side" face.

The position TY and TZ, and orientation RY, RZ of the display surface are then modified using calculation software so that at least one light ray coming from the center of the virtual image coincide with said gaze direction of virtual image GDVI. For example, the position TY, TZ, RY, RZ are determined so that the direction of exiting ray coincides with the gaze direction of virtual image GDVI. Corresponding TY, TZ, RY, RZ values are stored by the calculation software and used to manufacture the optical equipment.

Alternatively, the optical equipment may comprise adjustment means for positioning the display surface at the calculated position TY, TZ, RY, RZ.

The ophthalmic function provides the optical prescription of the wearer. It can be for example the optical power prescribed to the wearer for providing him a sharp vision for far vision direction, near vision direction, or both. The ophthalmic function may provide optical design similar to single vision lenses, or bifocal lenses, or progressive lenses.

The ophthalmic function may also provide a null optical power, for people who don't need any optical correction.

The method according to the invention may also apply to an optical equipment of the type represented on figure 4.

As represented on figure 4, the optical equipment comprises comprising an optical waveguide 30 positioned between the "object side" face and said "eye side" face of the optical lens.

The display surface 24 is an exit surface of said optical waveguide. The display device generates a beam reflecting on the display surface 24. The optical waveguide carries the virtual image produced by the source 32 toward the "eye side" face, having a given surface, according to a direction defined by the orientation RX, RY, RZ of the display surface.

The method further comprises an accommodation determining step S8 during which the accommodation required by the wearer to visualize the virtual image is determined. During said accommodation determining step, one determines the "object side" face so that the "object side" face carries said required accommodation in said gaze direction of virtual image GDVI.

Accommodation is expressed in Dioptries D. An example of a method for determining accommodation is disclosed in US patent US 7,857,444.

According to an embodiment of the invention applied to an optical equipment of the type represented on figure 4, the determination step S10 further comprises
- an "object side" face area determining step S 10.11,
- an "eye side" face area determining step S10.12, and
- a position determining step S10.13.

During the "object side" face area determining step S10.11, the "object side" face is determined to be equal to the required accommodation in the gaze direction of virtual image GDVI, determined during the accommodation determination step.

The area of the eye side face position Xe, Ye, Ze can be determined, as an good approximation, as the intersection of the gaze direction of the virtual image with a plane at a distance q' from the center of rotation of the eye, as described in figure 2. The area of the object side face position Xe, Ye, Ze can be determined, as a good approximation, as Zo = Ze ,Yo = Ye , and Xo = Xe + Tl, Tl being the thickness of the lens.

The position of the display surface can be determined as follows :
a ray of light corresponding to the gaze direction of the virtual image is propagated , using a optical calculation software and a modelisation of the lens, until it reaches the eye side face 20 of the lens 12. Then, the ray of light is propagated in the lens until it reaches a Xd position corresponding to the wanted X position of the display surface within the lens.

For example, the Xd position may be equal to Xe + Tl/2.

The TY and TZ, RY, RZ of the display surface are then modified using calculation software so that at least one light ray coming from the center of the virtual image coincide with said gaze direction of virtual image. For example, the position TY, TZ, and orientation RY, RZ of the display surface 24 are determined, preferably using an optimization process, so that the optical axis coincide with the gaze direction. Then, he position TY, TZ, and orientation RY, RZ of the display surface 24 are stored by the calculation software and used to manufacture the optical equipment.

During the TY, TZ, RY, RZ determination, it is possible to check whether the waveguide 30 is fully embedded within the optical lens 12 and to reject any solution that does not comply with specification.

Advantageously, one may compute an additional optimization, for example optimization of the Xd position so as to minimize the thickness of the lens.

Advantageously, one may consider the waveguide size as a parameter during the optimization process, so as to ensure for example that the display source 32 is positioned close to the edge of the lens, for example close to the temple of the wearer.

During this optimization process, the object side area face and the eye side area face can be determined for various pantoscopic angles or various wrap angles so as to better fit to the optical equipment. For example, if the optical lens 12 when supported in the optical equipment has a pantoscopic angle of 10°, it's better to start the optimization process with a pantoscopic angle having a value close to 10°.

During the "eye side" face area determining step S10.12, the "eye side" face is determined so that the optical lens provides an ophthalmic function to the eye of the wearer.

During the position determining step S10.13, the position TX, TY, TZ of the display surface relative to the source and to the optical lens is determined considering the given gaze direction of virtual image.

According to an embodiment of the invention applied to an optical equipment of the type represented on figure 4, the determination step S10 further comprises
- a display surface position determining step S10.111,
- an "eye side" face area determining step S10.112, and
- an "object side" face area determining step S10.113.

During the display surface position determining step S10.111, the position TX , TY, TZ of the display surface of the device relative to the source and the optical lens is determined considering the given gaze direction of virtual image.

During the "eye side" face area determining step S10.112 the "eye side" face is determined so that the optical lens provides an optical power equal to ophthalmic function minus said required accommodation determined at the accommodation determination step S8.

During the "object side" face area determining step S10.113 the "object side" is determined so that the optical lens provides said ophthalmic function to the eye of the wearer.

According to an embodiment of the invention applied to an optical equipment of the type represented on figure 4, the determination step S10 further comprises:
- an "eye side" face determining step S 10.1111,
- an "object side" face determining step S10.1112, and
- a display surface position determining step S10.1113.

During the "eye side" face area determining step S10.1111 at least one area of the "eye side" face is determined so that it provides a power equal to the ophthalmic function minus said required accommodation determined during the accommodation determining step S8.

During the "object side" face area determining step S10.1112, the "object side" face is determined so that the optical lens provides said ophthalmic function to the eye of the wearer.

During the position determining step S10.1113, the position TX, TY, TZ of the display surface in respect with the source and the optical lens is determined in taking into account the given gaze direction of virtual image.

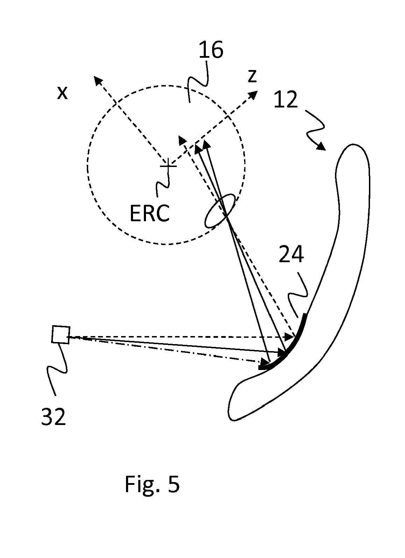

The method according to the invention may also apply to an optical equipment of the type represented on figure 5.

As represented on figure 5, the display device of the optical equipment comprises a display surface 24 that is a reflecting surface. The reflecting surface is arranged on the "eye side" face of the optical lens. The display device generates a light beam which is sent towards the eye of the wearer. The display surface may have a parabolic shaped surface.

According to an embodiment of the invention applied to an optical equipment of the type represented on figure 4, the method may further comprise:
- a reflecting surface position determining step S31,
- an "eye side" face determining step S32, and
- an "object side" face determining step S33.

During the position and orientation determining step S31, the position TX, TY, TZ of the reflecting surface is determined considering the given gaze direction of virtual image and the ophthalmic prescription of the wearer.

During the "eye side" face determining step S32, the "eye side" face of the optical lens is determined so as to include the reflecting surface. Then, the "eye side" face can differ in curvature out of the reflecting surface.

During the "object side" face determining step S33, the "object side" face of the optical lens is determined so that the optical lens provides an ophthalmic function to the wearer.

The "eye side" face is determined for example in the following way: the ray of light corresponding to the gaze direction of the virtual image is propagated by calculation towards the reflecting surface, and then is reflected by the reflecting surface. The calculated reflected gaze direction is then extended toward the display source 32. If the reflected gaze direction does not go through the display source 32, then the orientation RY, RZ of the reflecting surface is modified by optimization until the reflected gaze direction go through the display source 32.

Then, the curvature of the reflecting surface 24 is modified so that every rays of light coming from the display source 32 converge to the eye of the wearer when he/she look in the gaze direction of virtual image.

The reflecting surface 24 can be a fully reflecting surface or a semi reflecting surface.

Once the curvature of the reflecting surface was determined the "eye side" face is determined so as to include the reflecting surface. The curvature of the "eye side" face may be the same as the reflective surface curvature. Preferably the curvature of the "eye side" face is different, for example to reduce the global "eye side" face curvature.

Then, the object side face is determined according to the ophthalmic function and the "eye side" face curvature so as to provide the ophthalmic function to the wearer.

According to an embodiment of the invention applied to an optical equipment of the type represented on figures 4 and 5 with a diffractive and/or holographic display surface, the method may further comprise:
- an optical lens faces determining step S21
- a position determining step S22, and
- a diffractive and/or holographic display geometrical feature determining step S23.

During the optical lens faces determining step S21, the "object side" face and the "eye side" face of the optical lens are determined so that the optical lens provides ophthalmic function adapted to the wearer.

During the position determining step S22, the position TX, TY, TZ on the "eye side" face of the diffractive and/or holographic display 24 is determined in taking into to the given gaze direction of virtual image.

During the geometrical feature determining step S23, the geometric features of the holographic surface of the device is determined according to the position of the source, the gaze direction of virtual image, the position of the optical lens relative to the eye of the wearer and the "eye side" face of the optical lens.

The invention has been described above with the aid of embodiments without limitation of the general inventive concept.

Many further modifications and variations will suggest themselves to those skilled in the art upon making reference to the foregoing illustrative embodiments, which are given by way of example only and which are not intended to limit the scope of the invention, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A method of determining an optical equipment comprising an optical lens mounted in a spectacle frame intended to be worn by a wearer so that said optical lens is positioned in front of an eye of said wearer relative to said eye, said optical lens having an "object side" face and an "eye side" face, the equipment further comprises a display device, said optical lens being adapted to transmit to said eye of the wearer a real image and a virtual image, said real image being representative of a scene in front of said optical lens, said virtual image being formed by light rays generated by a display source (32) of said display device, said virtual image being directed towards said eye (16) via a display surface (24), a gaze direction of virtual image (GDVI) being determined in respect with a reference gaze direction of the wearer (RGD), the method comprises a determination step (S10) in which a position (TX, TY, TZ) and/or an orientation (RX, RY, RZ) of said display surface is/are determined so that at least one light ray coming from the center of the virtual image and propagating in free space out of the optical lens coincides with said gaze direction of virtual image (GDVI).

2. The method according to claim 1, wherein said determination step (S10) further comprises determining the optical surface of said "eye side" face so that at least one light ray coming from the center of the virtual image coincides with said gaze direction of virtual image (GDVI).

3. The method according to one of claims 1 or 2, wherein said determination step (S10) further comprises determining the geometry of the display surface so that at least one light ray coming from the center of the virtual image coincides with said gaze direction of virtual image (GDVI).

4. The method according to one of the preceding claims, wherein said method further comprises a step of determining the position of the eye (S2) in which the position of the eye with respect to said optical lens is determined and the determination step (S10) takes into account said position of the eye.

5. The method according to one of the preceding claims, wherein said optical lens has an ophthalmic function adapted to a prescription of the wearer, and the method further comprises an ophthalmic function determination step (S1) during which said ophthalmic function is determined and said determination step (S10) takes into account said ophthalmic function.

6. The method according to claim 5, said display surface of said display device being a semi-reflecting surface and being arranged on the "object side" of the optical lens, said display device generating a beam reflecting on said display surface, the determination step (S10) includes the sub-steps of:
- (S10.1) determining the "object side" face and the "side eye" face so that the optical lens provides to said eye said ophthalmic function in all gaze the directions;
- (S10.2) determining a position of said display surface relative to said optical lens taking into account said "object side" face and said "side eye" face determined in the previous sub-step (S10.1).

7. The method of claim 6, the method further comprising a step of (S8) for determining an accommodation required by the wearer to visualize the virtual image and wherein said sub-step of determining the "object side" face and the "side eye" face (S10.1) further comprises determining said "object side" face so that the "object side" face provides a power equal to said required accommodation in said gaze direction of virtual image (GDVI).

8. The method according to claim 5, said optical lens comprising an optical waveguide positioned between said "object side" face and said "eye side" face, said display surface being an exit surface of said optical waveguide, said display device generating a beam reflecting on said display surface, said optical waveguide carrying the virtual image produced by said source toward said "eye side" face according to a direction defined by the orientation (RX, RY, RZ) of said display surface, the method further comprising a step of (S8) for determining an accommodation required by the wearer to visualize the virtual image and the determination step (S10) further comprises the sub-steps of:
- (S10.11) determining the "object side" face so that said "object side" face provides a power equal to said required accommodation in the gaze direction of virtual image (GDVI);
- (S10.12) determining the "eye side" face so that said optical lens provides said ophthalmic function to said eye,
- (S10.13) determining the position (TX, TY, TZ) of said display surface.

9. The method according to claim 5, said optical lens comprising an optical waveguide positioned between said "object side" surface and said "eye side" surface, said display surface being an exit surface of said optical waveguide, said display device generating a light beam reflecting on said display surface, said optical waveguide carrying the virtual image produced by said source toward said "eye side" surface according to a direction defined by the orientation (RX, RY, RZ) of said display surface, the method further comprising a step of (S8) determining an accommodation required by the wearer for viewing the virtual image and the determination step (S10) comprises sub-steps of:
- (S10.111) determining the position (TX, TY, TZ) of said display surface;
- (S10.112) determining the "eye side" face so that it provides a power equal to said ophthalmic function minus said required accommodation;
- (S10.113) determining the "object side" face so that said optical lens provides said ophthalmic function to said eye.

10. The method according to claim 5, said optical lens defining a "real view field" in which said wearer receives said real image, and wherein said gaze direction of virtual image (GDVI) propagates from the center of the real view field, said optical lens comprising an optical waveguide positioned between said "object side" face and said "eye side" face, said display surface being an output surface of said optical waveguide, said optical waveguide carrying the image virtual produced by said source to said "eye side" face according to a direction defined by the orientation (RX, RY, RZ) of said display surface, said optical waveguide having a given position relative to said spectacle frame, the method further comprises a step of (S8) determining an accommodation required by the wearer for viewing the virtual image and the determination step (S10) includes the sub- steps of:
- (S10.1111) determining the "eye side" face so that it provides a power equal to said ophthalmic function minus said required accommodation ;
- (S10.1112) determining the "object side" face so that the optical lens provides said ophthalmic function to said eye;
- (S10.1113) determining the position (TX, TY, TZ) of said display surface in taking into account said gaze direction of virtual image (GDVI).

11. The method according to claim 5, said display surface being a diffractive surface and/or holographic surface arranged on the "eye side" face, said display device generating a light beam which is returned towards the eye, the method further comprising steps of:
- (S21) determining the "object side" face and the "eye side" face so that the optical lens provides the ophthalmic function,
- (S22) determining the position (TX, TY, TZ) on the "eye side" face of the diffractive surface and/or holographic surface in taking into account the gaze direction of virtual image (GDVI);
- (S23) determining the geometric features of the diffractive surface and/or holographic surface of said device according to the position of the source, the gaze direction of virtual image (GDVI), the position of the optical lens relative to the eye of the wearer and the "eye side" face.

12. The method according to claim 5, wherein said display surface is a reflecting surface arranged on said "eye side" face, said display device generating a light beam which is sent towards the eye, the method further comprising steps of:
- (S31) determining the position (TX, TY, TZ) of the reflecting surface in taking into account the gaze direction of virtual image (GDVI) and the prescription of the wearer,
- (S32) determining said "eye side" face so that said "eye side" face supports the reflecting surface;
- (S33) determining the "object side" face so that the optical lens provides the ophthalmic function to the wearer.

13. The method according to one of claims 5 to 12, wherein the sub-steps of the determination step (S10) are repeated according to an iterative process.

14. A method of manufacturing an optical lens of optical equipment, said optical lens being adapted to be mounted in a spectacle frame intended to be worn by a wearer so that said optical lens is positioned in front of an eye of said wearer relative to said eye, said method comprising a step of selection of an optical waveguide in a set of optical waveguides of different optical path length.
